# EUROPEAN PATENT SPECIFICATION

(11) **EP 2 362 250 B1**
(45) Date of publication and mention of the grant of the patent: **08.04.2020**
(21) Application number: 10154967.3
(22) Date of filing: 26.02.2010
(51) Int. Cl.: F21V 8/00

(54) **Light guide for improving device lighting**
Lichtleiter zur Verbesserung einer Vorrichtungsbeleuchtung
Guide lumineux pour améliorer l'éclairage d'un dispositif

(43) Date of publication of application: 31.08.2011
(73) Proprietor: BlackBerry Limited, Waterloo, ON N2K 0A7 (CA)
(72) Inventor: Lee, Hsin, Chin, Waterloo, ON N2L 3W8 (CA); Broga, Antanas, Matthew, Waterloo, ON N2L 3W8 (CA)
(74) Representative: MERH-IP Matias Erny Reichl Hoffmann Patentanwälte PartG mbB

(56) References cited:
- EP-A1- 1 329 664
- EP-A2- 2 053 430
- US-A- 5 627 926
- US-A1- 2005 180 169
- US-A1- 2007 127 268
- US-A1- 2009 273 949

## Description

### FIELD

The present specification relates generally to lighting technologies and more particularly relates to a light guide for providing lighting to an electronic device.

### BACKGROUND

Portable electronic devices, cellular telephones and other devices frequently include a display as well as one or more input devices. Low light conditions, however, can dramatically impact device usability, particularly where the emitted light from the display can make it difficult or impossible to see an input device near that display. To compensate for low light conditions, small lights may be included so as to light the input device.

US 2007/0127268 A1 discloses a backlight module, wherein a guide plate includes a prism structure for scattering the light emitting out of the guide plate. In this prism structure, one prism immediately follows another, without any spacing between the positions of the two prisms. The prisms have a rectangular elongated base and each prism extends along the whole width of the light guide plate.

US 2005/0180169 A1 discloses linear "light distributors" for linear light sources, such as fluorescent lamps or linear arrangement of LEDs. EP 2 053 430 A2 discloses a light control plate for widening incident light within a predetermined angle range and for emitting thus widened light from the exit surface. US 5,627,926 discloses an information indicator including a scattering plate and a prism plate. EP 1 329 664 A1 discloses a light source device comprising a light guide and a leaky ray modulator comprising a composite layer with regions of different refractive indices. US 2009/0273949 A1 discloses a light guiding system for lighting a keypad module of a mobile communication device.

### SUMMARY

A first aspect of the specification provides a light guide according to claim 1.

The first angle can be at least one of: between about one degree and about eighty degrees; between about thirty degrees and about fifty degrees; and about forty degrees.

The second angle can be at least one of: between about one degree and about eighty degrees; between about ten degrees and about thirty degrees; about twenty degrees; and different than the first angle.

At least one of the prisms can be a pyramid shape. The pyramid shape can be a square pyramid.

The first position can center the first prism in relation to the light emitter.

The first position can place the first prism off center in relation to the light emitter.

A second aspect of the specification provides an electronic device according to claim 8.

The aperture can be disposed on a key of a keyboard.

The aperture can be configured for illuminating a surface of the electronic device and the device one of a cellular telephone, a handheld remote control unit, a garage door opener, a portable email paging device, a camera, a portable music player, a portable video player, a portable video game player, a handheld global positioning system (GPS) device, a keyboard for a desktop computers, a video game control pad.

The aperture can be configured for a backlight of a display on the electronic device.

### BRIEF DESCRIPTION OF THE DRAWINGS

The following Figures show certain exemplary embodiments:
Figure 1 is a front view of a non-limiting example of a portable electronic device to which light guides according to the present specification can be applied.
Figure 2 is an exploded view of the portable electronic device of Figure 1,
Figure 3 is an end view of the device of Figure 1.
Figure 4 shows one of the keys from Figure 3 in greater detail.
Figure 5 is front view of the substrate from Figure 2.
Figure 6 is a sectional view of the substrate of Figure 5 providing an embodiment of a light-guide.
Figure 7 shows a detail of a portion of the light-guide shown in Figure 6.
Figure 8 shows the light-guide of Figure 6 with the light emitter emitting light.
Figure 9 shows a top view of a light assembly in accordance with another embodiment of the invention.
Figure 10 shows another top view of a light assembly in accordance with a non-limiting example.
Figure 11 shows an example of a three-dimensional perspective view of a light-guide
Figure 12 shows an example of a variation of a sectional view of a light-guide providing a pitch between adjacent prisms.

### DETAILED DESCRIPTION

This specification pertains to light guides that direct light generated by a light emitter for emission from an electronic device. For example, in an electronic device having an input device such as a keyboard or keypad, the light guide directs light from the emitter towards an aperture associated with an input device. As will be discussed further below, the aperture can be any structure that defines an opening, or a window, or transparent material, or translucent material, or any other structure by which the light may issue from the electronic device. In one illustrative embodiment, an aperture may be an illuminated key of a keyboard. The illumination of the key comes from light generated by the light emitter and directed to the key by the light guide.

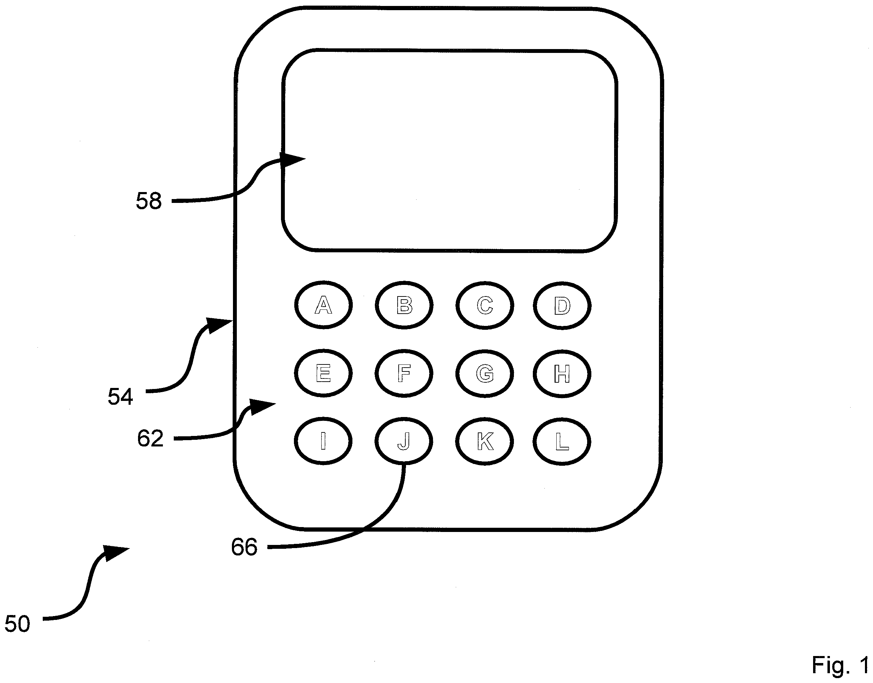

Figure 1 shows a schematic representation of a non-limiting example of a portable electronic device 50 to which light guides, as discussed in greater detail below, can be applied. It is to be understood that portable electronic device 50 is purely exemplary, and it will be apparent to those skilled in the art that a variety of different portable electronic device structures are contemplated. Indeed variations on portable electronic device 50 can include, without limitation, a cellular telephone, a handheld remote control unit, a garage door opener, a portable email paging device, a camera, a portable music player, a portable video player, a portable video game player and a handheld global positioning system (GPS) device. Other contemplated variations include devices which are not necessarily portable, such as keyboards for desktop computers, video game control pads and traditional telephone handsets.

Device 50 comprises a chassis 54 that supports a display 58. Display 58 can comprise one or more light emitters such as an array of light emitting diodes (LED), liquid crystals, plasma cells, or organic light emitting diodes (OLED). Other types of light emitters are contemplated. In general, display 58 can be any kind of apparatus for displaying visual information. Display 58 is typically controlled by one or more processing units (not shown) supported within chassis 54. It should be understood that other types of electronic devices which do not include displays and which can utilize the light guides discussed herein are contemplated, and accordingly, display 58 is optional for implementing light guides as discussed herein

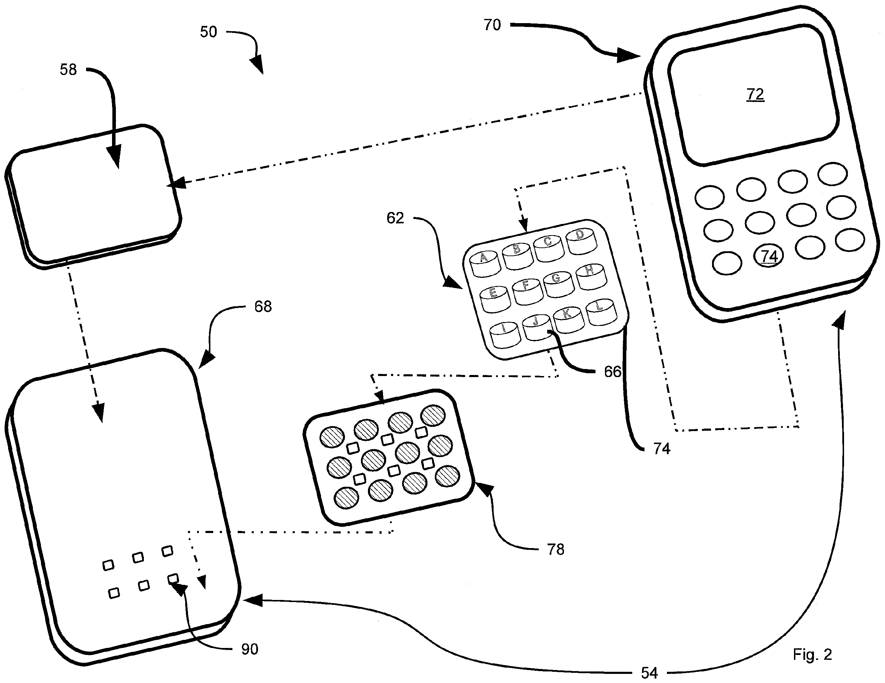

Device 50 also comprises a keyboard 62. Keyboard 62 comprises a plurality of keys 66. For ease of explanation, only the key bearing the letter "J" is indicated with reference 66 in Figure 2. Also for ease of explanation, device 50 is shown as only having twelve keys, labeled "A" through "I", However, it is to be understood that this specification is not limited to any particular structure, spacing, pitch or shape of keyboard 62, and the depiction in Figure 1 is purely exemplary. For example, full or reduced "QWERTY" keyboards are contemplated. As another example, numeric keyboards as commonly employed on telephones or handheld remote control units are also contemplated. Other types of keyboards are contemplated. It is also to be understood that while the present embodiment is directed to lighting of a keyboard, such as keyboard 66, the present specification also contemplates the lighting of other components, such as touch-pads, joysticks, trackballs, track-wheels, keypads, instrument panels in aircraft or other vehicles, a backlight for a display, and any other component of electronic devices that includes lighting so that the electronic device can be seen in low-light environments. It is also to be understood that light guides can be applied to other, more general lighting applications associated with apertures on electronic devices, such as illuminated labels, symbols or indicator lights not associated with a particular input device.

Figure 2 shows an exploded view of device 50. Again, it is to be understood that the components shown in Figure 2 are purely exemplary and that other configurations of the internal components of a particular device which utilizes a light guide as discussed herein are contemplated. Figure 2 shows chassis 54 comprising a base 68 and a cover 70. Cover 70 is typically made from a plastic material and comprises a window 72 and a plurality of openings 74, with one opening 74 for each key 66. Cover 70 may or may not be partially translucent or transparent; but in general, window 72 may be an opening, or comprise a substantially transparent material so that information on display 58 can be presented and seen. As noted previously, light emitted from display 58 can make it difficult to discern light issuing from keyboard 62 near display 58.

As best seen in Figure 2, display 58 is mounted to base 68, although the electrical and mechanical connections between display 58 and base 68 are not shown for ease of explanation. Base 68 also comprises a plurality of light emitters 90 which can be implemented using, for example, light emitting diodes (LED). Figure 2 also shows a substrate 78 which is mounted to base 68, below display 58, although the mechanical connections between substrate 78 and base 68 are also omitted for ease of explanation. Substrate 78 will be discussed in greater detail below.

In a present exemplary embodiment, keyboard 62 is implemented as a continuous flexible polymeric membrane 74 with a plurality of projections therealong, each projection representing a separate key 66. The use of a continuous flexible polymeric membrane 74 may entail one or more advantages, such as advantages of cost or less susceptibility to contamination, but the concepts described herein are not limited to keyboards or other input devices that include such membranes.

When device 50 is assembled, display 58 is mounted to base 68, and substrate 78 is mounted to base 68 near display 58. Keyboard 62 is then placed over substrate 78, and finally cover 70 is disposed over display 58 and keyboard 62. Mechanical connections, such as snaps, screws, glue or other types of fasteners can be used to affix these components and attach cover 70 to base 68.

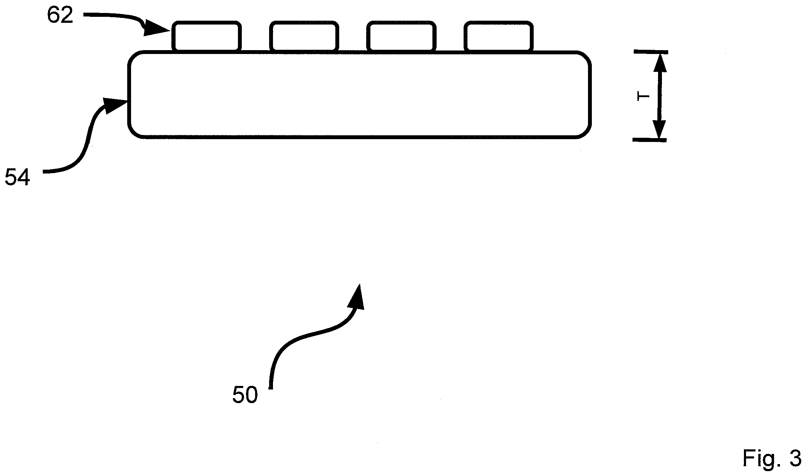

Referring now to Figure 3, an end view of device 50 is shown. As can be seen in Figure 3, device 50 can be characterized by a thickness "T". As will be discussed further below, the light guides discussed herein can permit device 50 to be structured to have a thickness "T", that is reduced at least in relation to devices 50 that otherwise do not incorporate the light guides discussed herein.

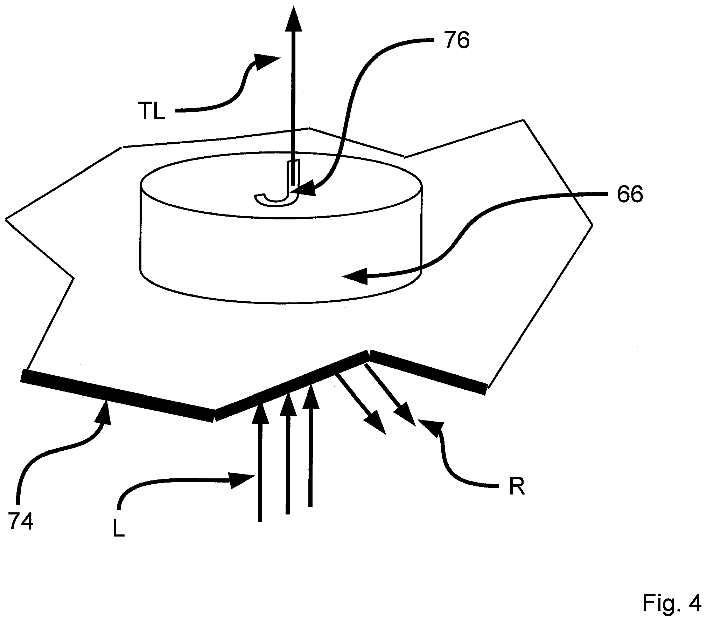

As best seen in Figure 4, membrane 74 is also opaque (i.e. partially transmissive or completely non-transmissive of light), except that an aperture 76 is provided for each letter (or other symbol) representing each key. In Figure 4, aperture 76 is in the shape of the letter "J" shown on key 66. It should be understood that the exact type and shape and structure of contemplated aperture 76 is not particularly limited, and can thus include structures that are simple windows or cut-out openings (i.e. no material is provided), or apertures that can be formed from a material that is transparent, or is at least partially transmissive of light.. In a present non-limiting embodiment, aperture 76 for each letter is more transmissive of light than the remainder of the structure of membrane 74. This feature is illustrated in Figure 4, where light L from a light source (associated with a light guide, discussed further below) is shown as incident on the side of keyboard 62 that is closest to substrate 78, however, due to the opaque nature of membrane 74, only transmitted light TL actually travels through the J-shaped aperture 76 on the "J" key 66. In this manner, when light L is present, the individual letters or symbols on keyboard 62 are visible in zero or low-light conditions as transmitted light TL creates an appearance of illumination of each of the letters or symbols on each key 66. Again, note that keyboard 62, and in particular key 66 shown in Figure 4, represents just one type of aperture contemplated. Indeed, the principles of light direction described below can be applied to the other types of apertures, whether or not associated with input devices, which are distinct from membrane 74. The underside of membrane 74 can also be provided with a white reflective layer, such that light L that does not become transmitted light TL becomes reflected light R. Reflected light R can undergo further internal reflections and eventually be emitted from another aperture from another key on keyboard 62.

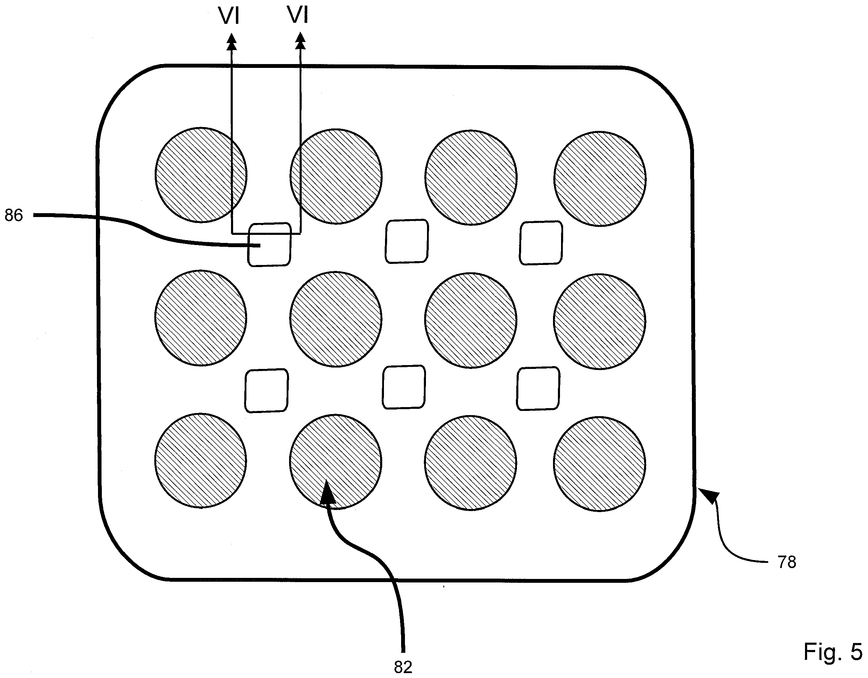

Referring now to Figure 5, substrate 78 is shown in greater detail. Figure 5 thus shows a plurality of locations 82 to accommodate mechanical communication between keys 66 and corresponding keyboard switches (not shown) which are typically provided on base 68. For simplicity, only one location 82 is labelled in Figure 5, which corresponds to the key 66 shown in Figure 4. Depressing of a key 66 results in activation of a switch within location 82 in the usual manner.

Substrate 78 comprises a plurality of light assemblies 86. Each light assembly 86 is mounted in a distributed manner across substrate 78. In the specific example of Figure 5, six light assemblies 86 are provided, but it should be understood that the number of light assemblies is not particularly limited and can be selected according to the overall size and shape of a particular keyboard 62 or other input devices or other types of apertures which are to be illuminated. However, as will be discussed further below, the spacing between each light assembly 86, and the structure of each light assembly 86, is configured such that the amount of light emitted from each key 66 (i.e. transmitted light TL in Figure 4), when device 50 is assembled, is substantially uniform. Expressed in other words, the amount of transmitted light TL from each aperture 76 of each key 66 will be substantially the same.

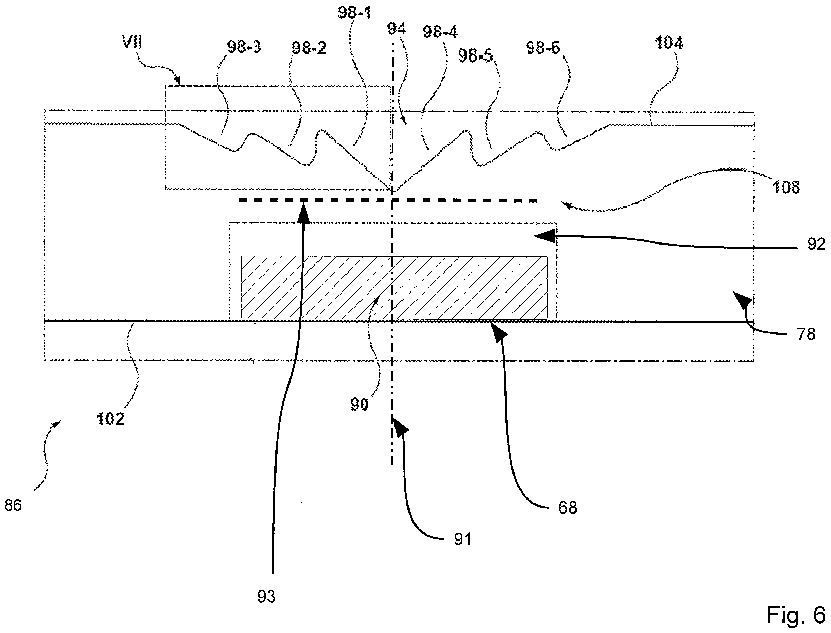

Figure 6 shows a single light assembly 86 in accordance with one example of this specification. Figure 6 shows a first surface 102 and a second surface 104 of substrate 78. Because Figure 6 provides a sectional view, surfaces 102 and 104 appear as edges. As indicated by Figure 6 and as described below, first surface 102 and a second surface 104 may be substantially planar but may also include physical features such that they are not strictly planar Light assembly 86 is formed within substrate 78 and between first surface 102 and second surface 104. First surface 102 and second surface 104 thus define the thickness of substrate 78. Advantageously, substrate 78, according to exemplary embodiments herein, can have a thickness of about 1.2 millimeters thereby providing structure for reducing an overall thickness of device 50 while still providing substantially uniform lighting across keyboard 62. For convenience and subsequent reference, Figure 6 also shows a dashed center-line 91 that passes through the center of light assembly 86 and through the center of light emitter 90. In a present embodiment, center-line 91 also happens to be normal to first surface 102 and second surface 104, but it is to be understood that in variants where first surface 102 or second surface 104 or both of them are non-planar, a conceptual center-line still exists. Similarly, Figure 6 also shows a dashed line that represents a plane 93 normal to center-line 91,

Explaining light assembly 86 further, light assembly 86 is proximate to light emitter 90, and may be in physical contact with light emitter 90 . As viewed in Figure 6, a pocket 92 may be formed along first surface 102. Pocket 92 may be complementary in shape to light emitter 90, and may fit over a respective light emitter 90 to cover that light emitter 90 when substrate 78 is mounted to base 68. In can be noted in Figure 6 that light emitter 90 is substantially rectangular in cross sectional shape, but other shapes are contemplated. Additionally, a light guide 94 is formed along second surface 104. Figure 6 also shows a gap 108 between pocket 92 and light guide 94. In a present, non-limiting embodiment, substrate 78 is a solid material and therefore gap 108 is also formed from that solid material.. In a present embodiment substrate 78 is either transparent, or substantially transparent, polycarbonate or poly(methyl methacrylate) (PMMA). Accordingly, gap 108 will have an index of refraction, and those skilled in the art will now recognize that light guide 94 can be configured so as to consider any effects of that index of refraction associated with gap 108. For example, polycarbonate has an index of refraction of about 1.59 while PMMA has an index of refraction of about 1.49. Likewise, light guides 94 can be implemented to account for refraction resulting from air (or vacuum or material) within pocket 92 that exists between light emitter 90 and gap 108. In the present embodiment, center-line 91 passes through the center of both light guide 94 and light emitter 90, but, as will be explained in relation to subsequent embodiments, the center of light guide 94 can be placed off-center from light emitter 90.

It should now be noted that substrate 78 and light assemblies 86 can be formed using various manufacturing processes, including injection molding. The various possible materials for substrate 78 can also be chosen for ease of manufacture depending on the selected manufacturing process.

It should now be understood that, while in the present embodiment substrate 78 is a solid material, and light guide 94 and pocket 92 are formed along edges of that solid material, an inverse structure is also contemplated, whereby, for example, gap 108 is a vacuum (or air or other gas), and light guide 94 itself formed from a solid material.

Light guide 94 comprises a plurality of reflective prisms 98. In the specific example of Figure 6, there are six prisms 98-1, 98-2, 98-3, 98-4, 98-5 and 98-6 Light guide 94 is a symmetric structure, whereby prisms 98-1, 98-2 and 98-3 are a mirror-image of prisms 98-4, 98-5 and 98-6. In general prisms 98 are elements that refract light (and may also transmit or reflect light, depending on the shape of the prism and the path of light through the prism). Expressed differently, prisms 98 change the direction of rays of emitted light EL from light emitter 90. Prisms 98 may have, but do not necessarily have, one or more planar faces. Prisms 98 include one or more boundaries, which represent the transition from one medium to another. For example, prism 98 may have one or more boundaries that transition from PMMA to air.

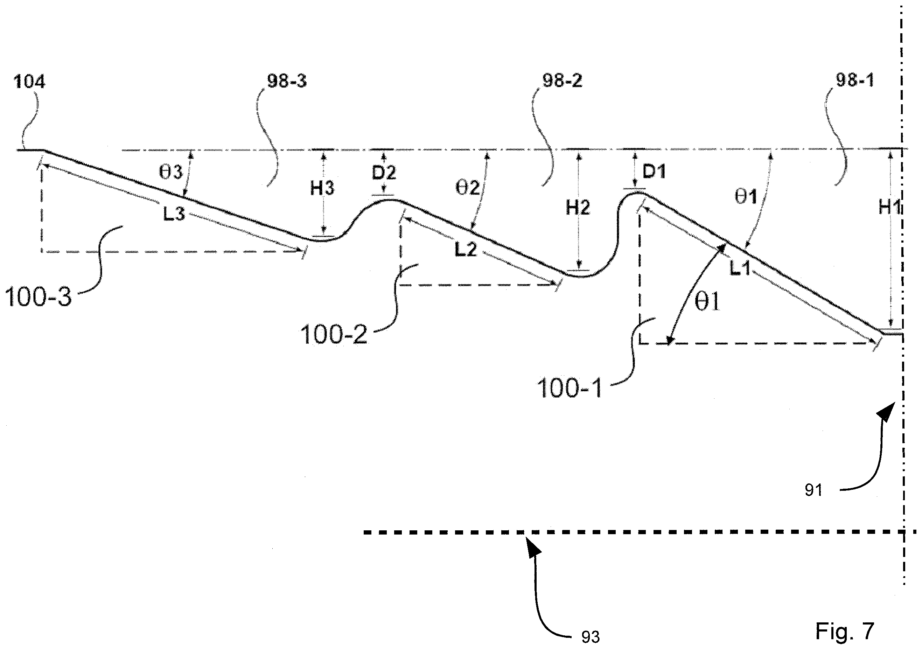

Figure 7 shows prisms 98-1, 98-2 and 98-3 in greater detail, and those skilled in the art will now recognize that the detail in Figure 7 likewise applies to prisms 98-4, 98-5 and 98-6. For the present, non-limiting exemplary embodiment, prisms 98-1, 98-2 and 98-3 are defined according to certain dimensions as illustrated in Figure 7. As viewed in Figure 7, each prism 98 is substantially triangular in cross-sectional shape, and to help further illustrate each prism 98, a cross-sectional triangle 100 is provided in dashed lines and which is complementary to the substantially triangular shape of each prism 98. More specifically, as viewed in Figure 7, prism 98-1 is substantially triangular in cross-sectional shape and can be defined by a height H1, a length L1, a distance D1, and an angle Θ1. One side of the cross-sectional triangle 100-1 is substantially parallel to the plane of the second surface 104 and another side of the cross-sectional triangle 100-1 is substantially perpendicular to the plane of the second surface 104, making triangle 100-1 a right-angled triangle. As shown by Figure 7, prism 98-1 is substantially triangular in cross-sectional shape in that one or more corners of the substantially triangular cross-sections may be rounded rather than sharp. Height H1 represents the perpendicular distance between the plane of the second surface 104 and a first corner of triangle 100-1. Distance D1 represents the perpendicular distance between the plane of the second edge 104 and a second corner of triangle 100-1. Distance L1 represents the length of the hypotenuse of triangle 100-1, the hypotenuse generally being a boundary (or part of a boundary) of the prism 98-1. Angle Θ1 represents the angle formed by the hypotenuse of triangle 100-1 and the plane of the plane of the second surface 104. Angle Θ1 also represents the angle formed by the hypotenuse of triangle 100-1 and plane 93. In a similar fashion, prism 98-2 has a substantially triangular cross-sectional shape and may be defined by a height H2, a length L2, a distance D2, and an angle Θ2. Prism 98-3 also has a substantially triangular cross-sectional shape and may be defined by a height H3, a length L3, and an angle Θ3. No distance D3 is shown in Figure 7 because the perpendicular distance between the plane of the second edge 104 and a respective corner of triangle 100-3 is zero, but this specification contemplates that any cross-sectional triangle may have any value D, including a negative value whereby a prism 98 extends beyond second surface 104. The selection of H, L, D and Θ is for purposes of convenience. As a matter of geometry and trigonometry, the shapes of the prisms could also be equivalently described with respect to other lengths or angles.. As depicted in Figure 7, the triangular cross-sections 100 of prisms 98 are proximate to one another, but the concept described herein is not limited to the distances from one prism to another. Table I shows certain possible ranges for each dimension for each prism 98. The dimensions in Figure 7 and Table I can also apply to the mirror-image prisms 98-4, 98-5 and 98-6.

**Table I**

| Possible Ranges of Dimension for Prisms 98 | | | | | | | | |
|---|---|---|---|---|---|---|---|---|
| Prism | Height H | Tolerance for Height H | Distance D | Tolerance For Distance D | Length L | Tolerance for Length L | Angle Θ | Tolerance for Angle Θ |
| 98-1 | about 0.3 mm | about +/-10 % | about 0.5 mm | about +/-10 % | about 0.5 mm | about +/-10 % | Θ1= about 40° | about +/- 10° |
| 98-2 | about 0.2 mm | about +/-10 % | about 0.25 mm | about +/-10 % | about 0.25 mm | about +/-10 % | Θ2= about 20° | about +/- 10° |
| 98-3 | about 0.2 mm | about +/-10 % | about 0.25 mm | about +/-10 % | about 0.25 mm | about +/-10 % | Θ3= about 5° | about +10° or about - 5° |

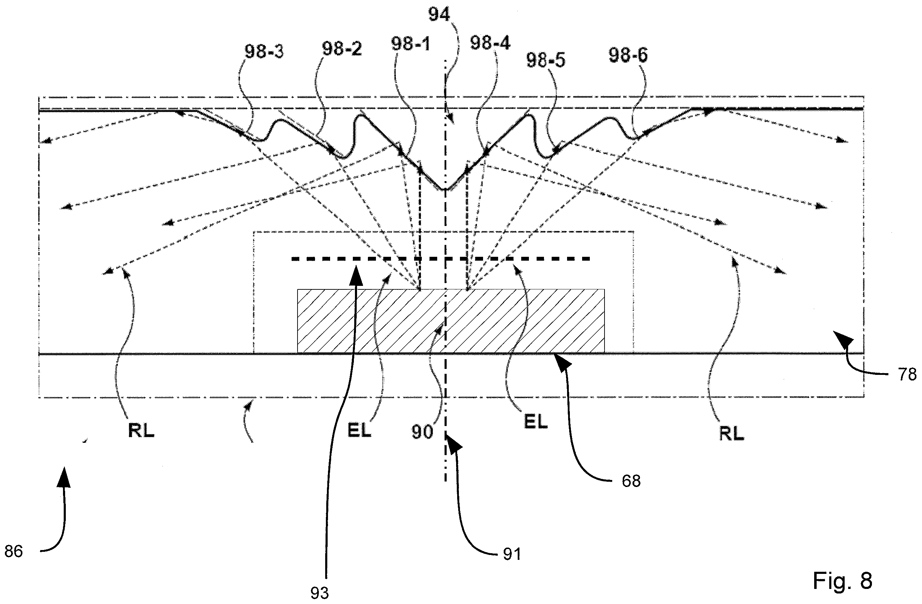

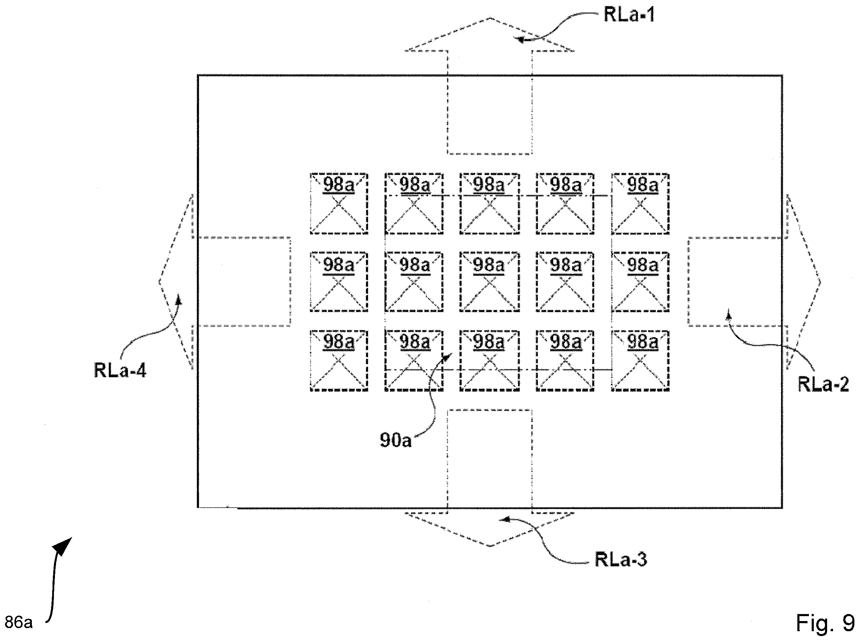

Referring now to Figure 8, when light emitter 90 is active, light emitter 90 emits light EL from an emitting surface of light emitter 90. In a present embodiment the emitting surface of light emitter 90 is substantially planar and parallel to plane 93. Where light emitter 90 has an emitting surface with a shape different from that shown in Figure 8, including an irregular, rounded, or otherwise non-planar emitting surface, such a light emitter can be described as having a tangent plane from which light is emitted, that tangent plane being substantially parallel to plane 93 and substantially perpendicular to center-line 91. An idealized representation of the scattered emitted light EL is shown in Figure 8. Emitted light EL will in turn, become incident on various prisms 98, and commonly incident on given boundary of a given prism 98, leading to a plurality of reflections, idealized representations of which are shown in Figure 9 as reflected light RL. Reflected light RL, in turn, will undergo further reflections against substrate 78 to (for example) generate light L as shown in Figure 4, leading to transmitted light TL through the aperture 76 of each key 66.

As a variation of the embodiment in Figure 8, not shown, light guide 94 can be partially transmissive, such that some of the emitted light EL is actually emitted from second surface 104. In this variation, the emitted light EL from second surface 104 of light assembly 86 can be used, for example, as a backlight, although in an electronic device having a different structure than portable electronic device 50.

It can be noted from Figure 7 and Table I that prism 98-1, the prism 98 nearest the center of light emitter 90 has the largest angle Θ and that prism 98-3, the prism 98 that is farthest from the center of light emitter 90 has the smallest angle Θ. In general, angle Θ decreases for each prism that is farther away from the center of light emitter 90. Indeed, light guide 94 can include any number "n" of prisms 98, where "n" is greater than one Furthermore, the angle Θ for each prism 98 can be any angle ranging from about one degree to about eighty degrees, where the angle Θ for each prism 98 becomes progressively smaller according to the distance of a given prism 98 from the center of light emitter 90. As rays of light are emitted in various directions from the light emitter 90, some rays may be transmitted, and others may be reflected (and thereby scattered), depending upon each ray's path in the prisms. The angles Θ can be selected to produce any degree of scattering. In general, the prism 98 that is closest to the center of the light emitter 90 has the largest angle Θ to produce a desired degree of scattering, and those prisms 98 further from the center of the light emitter 90 can produce substantially the same degree of scattering with smaller angles Θ.

As noted above, those skilled in the art will now appreciate that the dimensions in Figure 7 and Table I may also apply to the mirror-image prisms 98-4, 98-5 and 98-6. It is to be reemphasized that the foregoing is purely an example. In other example embodiments, other numbers of prisms 98 can be provided, or only some mirror-image prisms can be provided, or no mirror-image prisms may be provided.

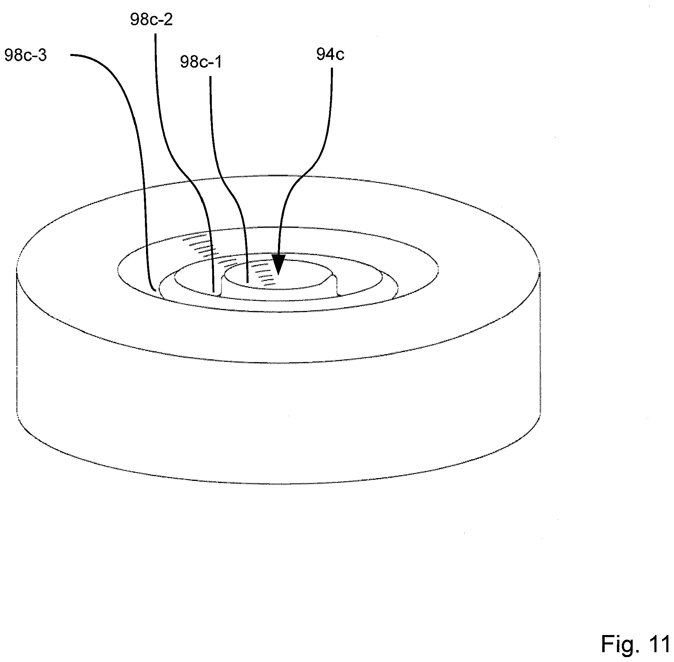

It can also be noted that Figure 6, Figure 7, and Figure 8 show only a cross-section of a light assembly 86 in one plane, but the geometry of light guide 94 can be the same or different in different cross-section planes. Indeed, light guide 94 can be configured according to different three-dimensional shapes, including, for example, using a pyramid for each prism 98. Pyramid shapes having different numbers of sides are contemplated, including tetrahedrons, square pyramid and pentagonal pyramids. (Another example shape is discussed further below in relation to Figure 11.)

Figure 9 provides another example embodiment, which shows a top view of a light assembly 86a that is based on light assembly 86, and therefore like elements bear like references except followed by the suffix "a". In light assembly 86a, fifteen prisms 98a are provided which are structured to generate reflected light RLa in four directions all away from light emitter 90a, as shown in Figure 9. Again, the prism 98a closest to the center of light emitter 90a is the largest in size, and the other prisms 98a become progressively smaller in size in proportion to their distance from the center of light emitter 90a, to thereby generate reflected light RLa. In the embodiment of Figure 9, each prism 98a is a four-sided pyramid in shape and prisms 98a are arranged in a grid.. To illustrate further possible variations, in Figure 9, the center of the grid of prisms 98 is offset from the center of light emitter 90a, such that more light is directed along arrow RLa-2, and less light directed along arrow RLa-4. It should be understood that light emitter 90a can also be centered in relation the grid of prisms 98, or offset in other positions.

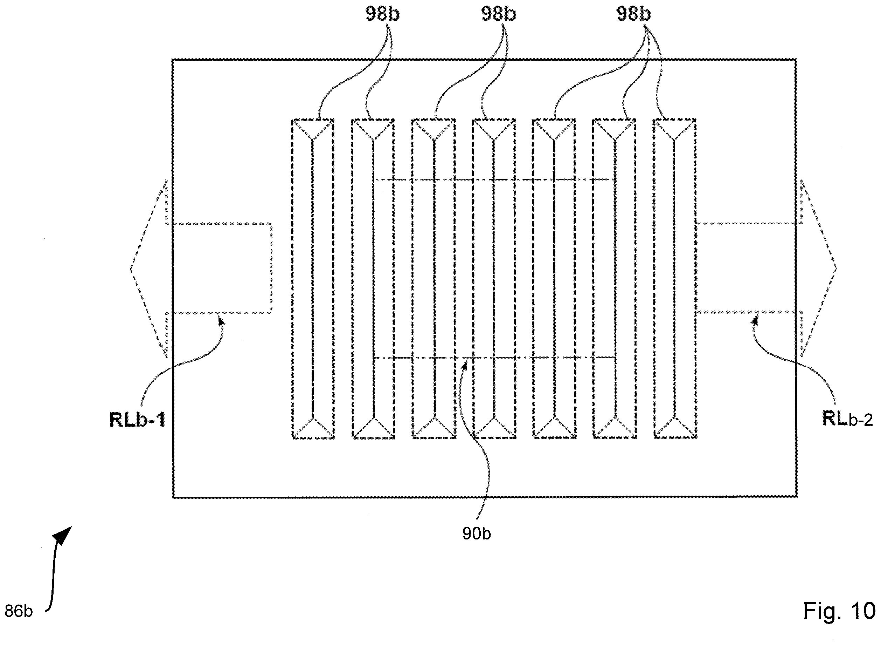

Furthermore, prisms 98a of light assemblies 86a can be configured to only generate reflected light reflected light RLa-2 and RLa-4; or to generate reflected light RLa-1 and reflected light RLa-3. Figure 10 provides another example embodiment, which shows a top view of a light assembly 86b that is based on light assembly 86, and therefore like elements bear like references except followed by the suffix "b". In light assembly 86b, seven prisms 98b are provided which are structured to generate reflected light RLb in two directions all away from light emitter 90b, as shown in Figure 10. As can be seen in Figure 10, each prism 98b is four-sided, but with each pair of sides having different lengths, where the longest pair of sides direct the majority of light RLb. Again, the prism(s) 98b closest to light emitter 90b is(are) the largest in size, and the prisms 98b become progressively smaller in size in proportion to their distance from light emitter 90b, to thereby generate reflected RLb. Each prism 98b is substantially rectangular and arranged in parallel with each other. Light assembly 86b generates reflected light RLb in two directions.

It is also to be reemphasized that prisms 98 can be configured in different shapes. For example, another variation is shown in Figure 11, with a light guide 94c which can comprise a central conical prism 98c-1 surrounded by concentric annular prisms 98c-2 and 98c-3. Those skilled in the art now will recognize that light guide 94c has a cross-section as shown in Figure 7. Of note is that the shape in Figure 11 can be expected to result in substantially omnidirectional reflections.

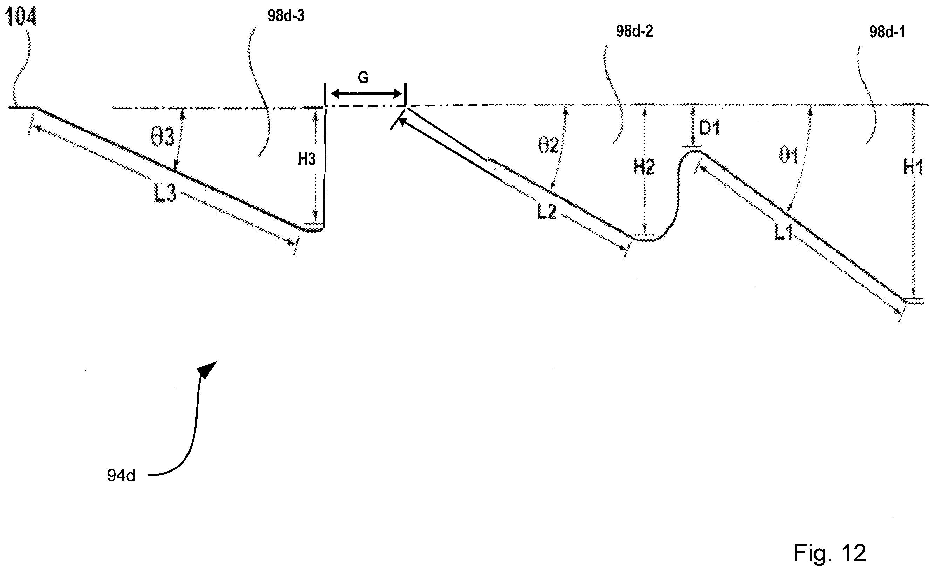

Other variations are also contemplated. For example, while Figure 7 and Table I show a particular exemplary configuration for light guide 94, still further configurations are contemplated. One such further configuration includes the option of spacing one or more prisms 98 apart from each other. This configuration is shown in Figure 12, where a further light guide 94d is shown. In Figure 12, light guide 94d is substantially the same as light guide 94, except that prism 98d-3 is spaced a distance G apart from prism 98d-2. The distance G is measured along second surface 104, and reflects the distance between the point where the length L2 of prism 98d-2 joins with second surface 104, and the point where height H3 of prism 98d-3 joins with second surface 104. It is contemplated that G can be in a range of about zero millimeters to about ten millimeters. Furthermore, the distance G can be applied to any adjacent sets of prisms 98d. For example, the distance G can be applied to the spacing between prism 98d-1 and prism 98d-2. Or, the distance G can be applied to the spacing between any additional prisms that are included beyond prism 98d-3.

Various advantages are afforded by this specification. For example, it can be possible to configure a device 50 having a thickness T (as shown in Figure 3) that is smaller than could be configured without the benefit of this specification. Furthermore, in certain manufacturing processes it is simpler to create tooling to form substrate 78 rather than applying a reflective coating to the underside of a keyboard 62 or equivalent structure,

While certain specific embodiments have been discussed herein, combinations, subsets and variations of those embodiments are contemplated. It is the claims attached hereto that define the scope of time-limited exclusive privilege of this specification.

## Claims

1. A light guide (94) configured for positioning proximate to a light emitter in an electronic device; said light guide comprising:
a plurality of prisms (98, 98a, 98d), including at least a first prism having a first position in relation to said light emitter (90); said first prism having a first boundary defined by a first length (L1) and a first angle (θ₁) in relation to a plane (93) parallel to a surface of said light emitter; and,
the plurality of prisms (98, 98a, 98d) further including at least a second prism having a second position in relation to said light emitter (90); said second prism having a second boundary defined by a second length (L2) and a second angle (θ₂) in relation to said plane (93);
wherein said first position is closer to said light emitter (90) than said second position and said second angle (θ₂) is less than said first angle (θ₁);
said second position being spaced apart from said first position;
the plurality of prisms (98, 98a, 98d) further comprising a plurality of additional prisms, each of said additional prisms having surfaces defined by additional lengths and additional angles in relation to said plane, each of said additional angle decreasing according to a distance from said light emitter; each of the plurality of prisms (98, 98a, 98d) having a substantially square base; the plurality of prisms (98, 98a, 98d) being arranged in a grid.

2. The light guide (94) of claim 1 wherein said first angle (θ₁) is at least one of:
between about one degree and about eighty degrees;
between about thirty degrees and about fifty degrees; and
about forty degrees.

3. The light guide (94) of any of the previous claims, wherein said second angle (θ₂) is at least one of:
between about one degree and about eighty degrees;
between about ten degrees and about thirty degrees;
about twenty degrees; and
different than said first angle (θ₁).

4. The light guide (94) of any of the previous claims, wherein at least one of said prisms is a pyramid shape.

5. The light guide (94) of claim 4 wherein said pyramid shape is a square pyramid.

6. The light guide (94) of any of the previous claims, wherein said first position centers said first prism in relation to said light emitter (90).

7. The light guide (94) of any of the previous claims, wherein said first position places said first prism off center in relation to said light emitter (90).

8. An electronic device (50) comprising:
a light emitter (90);
the light guide (94) of any of claims 1 to 7; and
an aperture (76) proximate to said light emitter (90) for transmitting light that is reflected from said plurality of prisms.

9. The electronic device (50) of claim 8 wherein said aperture (76) is disposed on a key (66) of a keyboard (62).

10. The electronic device (50) of claim 8 wherein said aperture (76) is configured for illuminating a surface of said electronic device and said device one of a cellular telephone, a handheld remote control unit, a garage door opener, a portable email paging device, a camera, a portable music player, a portable video player, a portable video game player, a handheld global positioning system (GPS) device, a keyboard for a desktop computers, a video game control pad.

11. The electronic device (50) of claim 8 wherein said aperture is configured for a backlight of a display (58) on said electronic device (50).

## Patentansprüche

1. Lichtleiter (94), der konfiguriert ist zum Positionieren in der Nähe eines Lichtsenders in einer elektronischen Vorrichtung; wobei der Lichtleiter aufweist:
eine Vielzahl von Prismen (98, 98a, 98d) mit zumindest einem ersten Prisma mit einer ersten Position in Bezug auf den Lichtsender (90); wobei das erste Prisma eine erste Grenze hat, die durch eine erste Länge (L1) und einen ersten Winkel (θ₁) in Bezug auf eine Ebene (93) parallel zu einer Oberfläche des Lichtsenders definiert ist; und
die Vielzahl von Prismen (98, 98a, 98d) weiter zumindest ein zweites Prisma mit einer zweiten Position in Bezug auf den Lichtsender (90) umfassen; wobei das zweite Prisma eine zweite Grenze hat, die durch eine zweite Länge (L2) und einen zweiten Winkel (θ₂) in Bezug auf die Ebene (93) definiert ist;
wobei die erste Position näher an dem Lichtsender (90) ist als die zweite Position und der zweite Winkel (θ₂) kleiner ist als der erste Winkel (θ₁);
wobei die zweite Position von der ersten Position beabstandet ist;
die Vielzahl von Prismen (98, 98a, 98d) weiter eine Vielzahl von zusätzlichen Prismen aufweisen, wobei alle der zusätzlichen Prismen Oberflächen haben, die durch zusätzliche Längen und zusätzliche Winkel in Bezug auf die Ebene definiert sind, wobei jeder des zusätzlichen Winkels gemäß einer Entfernung von dem Lichtsender abnimmt; wobei jedes der Vielzahl von Prismen (98, 98a, 98d) eine im Wesentliche quadratische Basis hat; wobei die Vielzahl von Prismen (98, 98a, 98d) in einem Gitter angeordnet sind.

2. Der Lichtleiter (94) gemäß Anspruch 1, wobei der erste Winkel (θ₁) zumindest eines ist aus:
zwischen ungefähr einem Grad und ungefähr achtzig Grad;
zwischen ungefähr dreißig Grad und ungefähr fünfzig Grad; und
ungefähr vierzig Grad.

3. Der Lichtleiter (94) gemäß einem der vorhergehenden Ansprüche, wobei der zweite Winkel (θ₂) zumindest eines ist aus:
zwischen ungefähr einem Grad und ungefähr achtzig Grad;
zwischen ungefähr zehn Grad und ungefähr dreißig Grad;
ungefähr zwanzig Grad; und
von dem ersten Winkel (θ₁) verschieden.

4. Der Lichtleiter (94) gemäß einem der vorhergehenden Ansprüche, wobei zumindest eines der Prismen eine Pyramidenform hat.

5. Der Lichtleiter (94) gemäß Anspruch 4, wobei die Pyramidenform eine quadratische Pyramide ist.

6. Der Lichtleiter (94) gemäß einem der vorhergehenden Ansprüche, wobei die erste Position das erste Prisma in Bezug auf den Lichtsender (90) zentriert.

7. Der Lichtleiter (94) gemäß einem der vorhergehenden Ansprüche, wobei die erste Position das erste Prisma in Bezug auf den Lichtsender (90) außermittig platziert.

8. Elektronische Vorrichtung (50), die aufweist:
einen Lichtsender (90);
den Lichtleiter (94) gemäß einem der Ansprüche 1 bis 7; und
eine Öffnung (76) in der Nähe des Lichtsenders (90) zum Leiten von Licht, das von der Vielzahl von Prismen reflektiert wird.

9. Die elektronische Vorrichtung (50) gemäß Anspruch 8, wobei die Öffnung (76) auf einer Taste (66) einer Tastatur (62) angeordnet ist.

10. Die elektronische Vorrichtung (50) gemäß Anspruch 8, wobei die Öffnung (76) zum Beleuchten einer Oberfläche der elektronischen Vorrichtung konfiguriert ist und die Vorrichtung eine eines zellularen Telefons, einer handgehaltenen Fernsteuerungseinheit, eines Garagentoröffners, einer tragbaren E-Mail-Paging-Vorrichtung, einer Kamera, einer tragbaren Musikwiedergabevorrichtung, einer tragbaren Videowiedergabevorrichtung, einer tragbaren Viedeospielvorrichtung, einer handgehaltenen GPS(Global Positioning System)-Vorrichtung, einer Tastatur für Desktop-Computer, oder eines Videospielsteuerpads.

11. Die elektronische Vorrichtung (50) gemäß Anspruch 8, wobei die Öffnung für eine Hintergrundbeleuchtung einer Anzeige (58) auf der elektronischen Vorrichtung (50) konfiguriert ist.

## Revendications

1. Guide optique (94) conçu pour être positionné à proximité d'un émetteur lumineux dans un dispositif électronique ; ledit guide optique comprenant :
une pluralité de prismes (98, 98a, 98d) incluant au moins un premier prisme ayant une première position par rapport audit émetteur lumineux (90) ; ledit premier prisme ayant une première limite définie par une première longueur (L1) et décrivant un premier angle (θ₁) par rapport à un plan (93) parallèle à une surface dudit émetteur lumineux ; et
la pluralité de prismes (98, 98a, 98d) incluant en outre au moins un second prisme ayant une seconde position par rapport audit émetteur lumineux (90) ; ledit second prisme ayant une seconde limite définie par une seconde longueur (L2) et décrivant un second angle (θ₂) par rapport audit plan (93) ;
ladite première position étant plus proche dudit émetteur lumineux (90) que ladite seconde position et ledit second angle (θ₂) étant inférieur audit premier angle (θ₁) ;
ladite seconde position étant espacée de ladite première position ;
la pluralité de prismes (98, 98a, 98d) incluant en outre une pluralité de prismes supplémentaires, chacun desdits prismes supplémentaires ayant des surfaces définies par des longueurs supplémentaires et des angles supplémentaires par rapport audit plan, chacun desdits angles supplémentaires diminuant en fonction d'une distance depuis ledit émetteur lumineux, chacun de la pluralité de prismes (98, 98a, 98d) ayant une base substantiellement carrée ; la pluralité de prismes (98, 98a, 98d) étant disposés en dans une grille.

2. Guide optique (94) selon la revendication 1, dans lequel ledit premier angle (θ₁) est au moins l'un des suivants
compris entre environ un degré et environ quatre-vingts degrés ; et
compris entre environ trente degrés et environ cinquante degrés ; et
environ quarante degrés.

3. Guide optique (94) selon l'une quelconque des revendications précédentes, dans lequel ledit second angle (θ₂) est au moins l'un des suivants :
compris entre environ un degré et environ quatre-vingts degrés ; et
compris entre environ dix degrés et environ trente degrés ; et
environ vingt degrés ; et
différent dudit premier angle (θ₁).

4. Guide optique (94) selon l'une quelconque des revendications précédentes, dans lequel au moins un desdits prismes a une forme pyramidale.

5. Guide optique (94) selon la revendication 4, dans lequel ladite forme pyramidale est une pyramide carrée.

6. Guide optique (94) selon l'une quelconque des revendications précédentes, dans lequel ladite première position centre ledit premier prisme par rapport audit émetteur lumineux (90).

7. Guide optique (94) selon l'une quelconque des revendications précédentes, dans lequel ladite première position place ledit premier prisme décalé du centre par rapport audit émetteur lumineux (90).

8. Dispositif électronique (50) comprenant :
un émetteur lumineux (90) ;
le guide optique (94) selon l'une quelconque des revendications 1 à 7, et
une ouverture (76) à proximité dudit émetteur lumineux (90) pour transmettre de la lumière qui est réfléchie par ladite pluralité de prismes.

9. Dispositif électronique (50) selon la revendication 8, dans lequel ladite ouverture (76) est pratiquée sur une touche (66) d'un clavier (62).

10. Dispositif électronique (50) selon la revendication 8, dans lequel ladite ouverture (76) est conçue pour éclairer une surface dudit dispositif électronique et ledit dispositif est un dispositif parmi un téléphone cellulaire, une unité de télécommande manuelle, un ouvreur de porte de garage, un dispositif de radiomessagerie e-mail portable, une caméra, un lecteur de musique portable, un lecteur vidéo portable, un lecteur de jeux vidéo portable, un système de positionnement global (GPS) portable, un clavier pour ordinateur de bureau, une tablette de commande de jeux vidéo.

11. Dispositif électronique (50) selon la revendication 8, dans lequel ladite ouverture est conçue pour le rétro-éclairage d'un afficheur (58) sur ledit dispositif électronique (50).
